(19) Europäisches Patentamt
European Patent Office
Office européen des brevets

(11) Veröffentlichungsnummer : **0 215 932 B1**

(12) **EUROPÄISCHE PATENTSCHRIFT**

(45) Veröffentlichungstag der Patentschrift :
21.12.88

(51) Int. Cl.⁴ : **F 16 L 23/00, E 06 B 3/96**

(21) Anmeldenummer : **86902317.6**

(22) Anmeldetag : **03.04.86**

(86) Internationale Anmeldenummer :
**PCT/DE 86/00147**

(87) Internationale Veröffentlichungsnummer :
**WO/8605855 (09.10.86 Gazette 86/22)**

(54) **FLANSCHVERBINDUNG ZWEIER IM QUERSCHNITT RECHTECKIGER LUFTKANALTEILSTÜCKE AUS BLECH.**

(30) Priorität : **06.04.85 DE 3512534**

(43) Veröffentlichungstag der Anmeldung :
**01.04.87 Patentblatt 87/14**

(45) Bekanntmachung des Hinweises auf die Patenterteilung : **21.12.88 Patentblatt 88/51**

(84) Benannte Vertragsstaaten :
**AT BE CH FR GB IT LI NL SE**

(56) Entgegenhaltungen :
**EP-A- 0 047 467
DE-A- 2 129 170
DE-U- 7 721 055
DE-U- 8 510 251
FR-A- 1 565 118
LU-A-    36 344
US-A- 3 200 913
US-A- 3 643 989**

(73) Patentinhaber : **SCHAUER, Markfried
Am Vogelbrink 3
D-3013 Barsinghausen (DE)**

(72) Erfinder : **SCHAUER, Markfried
Am Vogelbrink 3
D-3013 Barsinghausen (DE)**

(74) Vertreter : **Habbel, Hans-Georg, Dipl.-Ing.
Postfach 3429 Am Kanonengraben 11
D-4400 Münster (DE)**

**Beschreibung**

Die Erfindung betrifft eine Flanschverbindung zweier im Querschnitt rechteckiger Luftkanalteilstücke aus Blech gemäß dem Oberbegriff des Hauptanspruches.

Flanschverbindungen für Luftkanäle, deren Flansche aus Blechhohlprofilen und Stahlwinkelstücken gebildet werden, sind Stand der Technik. Aus der DE-PS 32 03 204 ist eine Vorrichtung zur Verbindung von Luftkanalelementen bekannt, die an ihren Stoßrändern mit Aufnahmen für Eckwinkel bildenden Flanschprofilen versehen sind, wobei die Flanschprofile zum Über- und Untergreifen der Wände der Luftkanalelemente einerseits und zur Bildung der Aufnahmebereiche für die Eckwinkel andererseits als doppelwandige, querschnittlich im wesentlichen L-förmige, aus Blech gefalzte Profile ausgebildet sind, wobei der Wandverlauf der einzelnen Profilbereiche im Abstand zueinander im wesentlichen parallel verläuft.

Diese bekannten Flanschverbindungen haben den Nachteil, daß nach Einstecken der Winkelstücke in die Blechhohlprofile die Winkelstücke in Einsteckrichtung durch Verkörnung oder Punktschweißung gesichert werden müssen, damit der aus vier Blechhohlprofilen und vier Winkelstücken bestehende, rahmenähnliche Flansch beim Aufziehen auf das Luftkanalteilstück nicht auseinanderfällt.

In Kenntnis dieses Mangels wird in der DE-OS 26 27 515 vorgeschlagen, Flansche aus Hohlprofilen und Winkelstücken zu fertigen, wobei in den Winkelstücken mehr als zwei Löcher vorgesehen sind, aber die Mitten dieser Löcher gleichen Abstand haben. Die Hohlprofile sind dabei so geformt, daß Näpfchen auf dem Hohlprofil mit dem gleichen Durchmesser und Abstand wie die Löcher in dem Winkelstück ausgeformt werden. Nach Einschlagen der Winkelstücke sollen die Näpfchen der Hohlprofile in den Löchern der Winkelstücke zu liegen kommen. Diese Flanschverbindung erwies sich für die Praxis als unbrauchbar.

Die Hohlprofile werden je nach gewünschter Abmessung des Luftkanalteilstückes abgelängt. Der Trennungsschnitt kann durch ein Näpfchen gehen, kann aber auch irgendwo zwischen zwei Näpfchen liegen. Werden nun die Winkelstücke eingeschlagen, rasten entweder alle Näpfchen am Hohlprofil in die Löcher des Winkelstücks ein oder überhaupt kein Näpfchen. Durch die vorgegebenen, fertigungstechnisch möglichen Durchmesser von Näpfchen und Löchern, sowie durch deren gleichmäßige Abstände ergeben sich bei eingerasteten Näpfchen für die Länge eines Stückes Hohlprofil mit zwei eingeschlagenen Winkelstücken Toleranzen, die maximal ein fast Zweifaches des Rapportes der Näpfchen und Löcher sind. Bei einem vorgeschlagenen Rapport von 1 cm — ein kleinerer dürfte fertigungstechnisch kaum möglich sein — würde diese Längentoleranz ca. 19 mm betragen. In der Praxis sind jedoch höchstens 2 mm tragbar.

Doch nicht nur aus diesem Grunde konnte die Flanschverbindung nach der DE-OS 26 27 515 nicht in die Praxis umgesetzt werden. Soll ein Flansch aus Blechhohlprofilen und Winkelstücken ohne weitere mechanische Bearbeitung oder Punktschweißen zur Sicherung der Winkelstücke in den Blechhohlprofilen auf die Enden der Luftkanalteilstücke aufgebracht werden, so muß jeweils zwischen Blechhohlprofil und Winkelstück eine hohe Haltekraft bestehen, da der Flansch mit dem Hammer auf das Luftkanalteilstück aufgeschlagen wird. Da bei der vorgeschlagenen Lösung mit Näpfchen und Löchern die Haltekraft gleich groß ist wie die beim Einschlagen erforderliche Kraft, ist eine Fertigung eines Flansches, bei dem die Winkelstücke mit hohem Kraftaufwand in das Hohlprofil geschlagen werden müssen, zu zeitaufwendig, zu kraftraubend und birgt zu hohe Verletzungsgefahr für den Verarbeiter in sich.

Aus der DE-OS 24 34 160 ist eine weitere Flanschverbindung bekannt, bei der die Winkelstücke im Hohlprofil verrasten. Hier wird in das Winkelstück eine rechteckige Aussparung gestanzt, in die eine ebenfalls rechteckige, ausgestanzte Zunge des Blechhohlprofils einrastet. Der dabei entstehende Flanschrahmen kann zwar nach Einschieben der Winkelstücke in die Blechhohlprofile nicht mehr auseinanderfallen, ist aber, bedingt durch die erforderliche Luft zwischen der Zunge des Blechhohlprofils und der Aussparung im Winkelstück, labil.

Diese Flanschverbindung weist weitere, gravierende Mängel auf. Die zur Verrastung erforderliche Zunge im Blechhohlprofil kann erst nach Ablängen der einzelnen, zur Fertigung des Flanschrahmens benötigten Blechhohlprofilstücke gestanzt werden. Dies ist ein zusätzlicher Arbeitsgang, der nur mit einem komplizierten, also teuren Stanzwerkzeug getätigt werden kann, da die Schnittplatte des Stanzwerkzeuges zum Stanzvorgang in das Blechhohlprofil eingeführt werden muß. Überdies wird beim Stanzvorgang die verzinkte Oberfläche des Blechhohlprofiles zerstört.

Aufgabe der Erfindung ist daher die Schaffung einer Lösung, mit der sich Flanschverbindungen aus Blechhohlprofilen und Winkelstücken aus Stahl zeit- und damit kostensparend ohne zusätzliche Sicherung der Winkelstücke in Einsteckrichtung durch Verkörnung oder Punktschweißung herstellen lassen, wobei gewährleistet sein muß, daß die die Blechhohlprofilstücke nach dem Absägen in beliebige Längen nicht mehr bearbeitet werden müssen, daß der zusammengefügte Flanschraum stabil und maßhaltig ist und daß die Haltekraft zwischen den Blechhohlprofilen und den Winkelstücken größer ist, als die zum Einschieben oder Einschlagen der Winkelstücke in die Blechhohlprofile aufzuwendende Kraft.

Diese Aufgabe wird durch die Lehre des Anspruches 1 gelöst.

Mit anderen Worten ausgedrückt :

Das Blechhohlprofil wird im Einsteckbereich des Schenkels des Winkelstückes, bevorzugter Weise in der der Kanalstirnseite abgewandten Wand mit einem zahnstangenartigen Raster, senkrecht zum Verlauf der Einsteckrichtung, versehen. Dies kann beim Walzen der Blechhohlprofile durch eine Prägerolle geschehen.

Der Schenkel des einzusteckenden Winkelstückes wird in Einsteckrichtung mit mehreren Erhebungen gefertigt, deren Abstände unterschiedlich so zu wählen sind, daß nach dem Einstecken des Winkelstückes in der gewünschten Endlage zumindest eine Erhebung des Schenkels des Winkelstückes in einer Vertiefung des zahnstangenartigen Rasters des Blechhohlprofiles einrastend zu liegen kommt.

Sind die Erhebungen auf dem Schenkel in dessen Längsrichtung des Winkelstückes nun beispielsweise dreieckig geformt, mit der Spitze des Dreiecks in Einschiebrichtung des Winkelstücks zeigend, und von der Basis zur Spitze sich verflachend ausgeformt, können die Winkelstücke ohne großen Kraftaufwand von Hand bis zur Endlage in das Blechhohlprofil geschoben werden. Die Erhebungen im zahnstangenartigen Raster des Blechhohlprofils gleiten über die schiefen Ebenen der Erhebungen auf dem Schenkel des Winkelstückes. Ein Lösen des Winkelstückes aus dem Blechhohlprofil ist in gewünschter Weise jedoch nicht mehr möglich, da sich mindestens eine dreieckige Erhebung auf dem Schenkel des Winkelstückes mit ihrer erhöhten Basis in einer Vertiefung im zahnstangenartigen Raster verhakt.

Vorteilhafte Ausgestaltungen sind in den Unteransprüchen und dem nebengeordneten Anspruch erläutert.

Bei den bekannten Hohlprofilen verlaufen die den Schenkel des Winkelstückes umschließenden Wandbereiche des Blechhohlprofils im wesentlichen senkrecht zur Kanaloberfläche, das Widerstandsmoment des Blechhohlprofils in bezug auf die zur Kanaloberfläche senkrecht stehende Achse ist gering. Die Ausführung der der Kanalstirnseite abgewandten Wand des Blechhohlprofils mit einer leicht schwalbenschwanzförmigen Nut, und daß die Bereiche der der Kanalstirnseite abgewandten Wand neben der Nut, jeweils vom mündungsseitigen Fußpunkt der Nut ausgehend, schräg nach oben und unten, von der Kanalstirnseite wegführend profiliert sind, erhöht das Widerstandsmoment des Blechhohlprofils in bezug auf die senkrecht zur Kanaloberfläche stehende Achse im Bereich der einzusteckenden Winkelstücke gegenüber bekannten Blechhohlprofilen erheblich.

Die hier aufgezeigte Form der Erhebungen auf dem Schenkel des Winkelstückes ist nur eine von vielen möglichen. Die beanspruchte Gestaltung läßt auch Vertiefungen im Bereich der Schenkel des Winkelstückes zu. Es ist nur darauf zu achten, daß die Ausformung des Blechhohlprofils so gewählt wird, daß sich Blechhohlprofil und Winkelstück in der Endlage in gewünschter Weise verhaken.

Durch die erfindungsgemäße Ausbildung der Erhebungen und Vertiefungen ist ein beliebig kleines Rastermaß der Flanschrahmen erzielbar. Nach dem Ablängen der Blechhohlprofile ist kein weiterer Arbeitsgang, wie etwa bei der DE-OS 24 34 160, erforderlich. Die Haltekraft zwischen Winkelstückschenkel und Blechhohlprofil ist wesentlich höher als die Einschubkraft im Gegensatz zur Lehre gemäß der DE-OS 26 27 515, wo beide Kräfte gleich groß sind. Die aus der DE-OS 28 17 413 bekannte Anordnung läßt zwar eine Halbierung des Rastermaßes zu. Eine Anregung zur beliebigen Verkleinerung des Rastermaßes ist dieser Literaturstelle aber nicht entnehmbar.

Ausführungsbeispiele der Erfindung sind in den Zeichnungen dargestellt und werden im nachfolgenden näher beschrieben. Es zeigt :

Fig. 1 ein Blechhohlprofil in perspektivischer Darstellung von der der Kanalstirnseite abgewandten Seite gesehen,

Fig. 2 ein Winkelstück, perspektivisch gezeichnet, von der der Kanalstirnseite abgewandten Seite gesehen,

Fig. 3 ein Blechhohlprofil mit teilweise eingeschobenem Winkelstück, perspektivisch gezeichnet, von der der Kanalstirnseite abgewandten Seite gesehen,

Fig. 4 einen Schnitt I-I durch das in Fig. 3 gezeichnete Hohlprofil, auf das Wesentliche reduziert,

Fig. 5 und 6 Varianten eines Blechhohlprofils mit teilweise eingeschobenen Winkelstücken, perspektivisch gezeichnet von der der Kanalstirnseite abgewandten Seite gesehen,

Fig. 7 schaubildlich eine Verbindung zweier Luftkanalteilstücke.

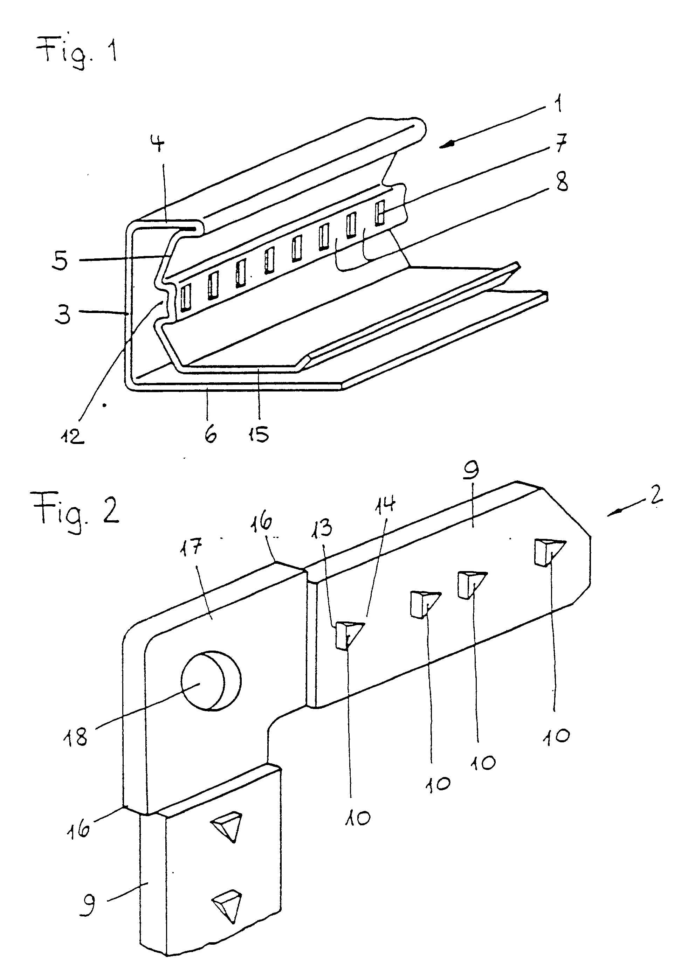

In Fig. 1 ist ein Blechhohlprofil 1 dargestellt, das aus der der Kanalstirnseite zugewandten Wand 3, der Kanalstirnseite abgewandten Wand 5, einer diese beiden Wände überbrückenden, teilweise doppellagig ausgeführten Wand 4 und den Wänden 6 und 15 besteht, zwischen die die Kanalwand des Luftkanalteilstückes 22 bzw. 23 eingeschoben wird. Eine leicht schwalbenschwanzförmige Nut 12 mit ihren Erhebungen 7 und Vertiefungen 8 verläuft in der der Kanalstirnseite abgewandten Wand 5 parallel zur Kanaloberfläche.

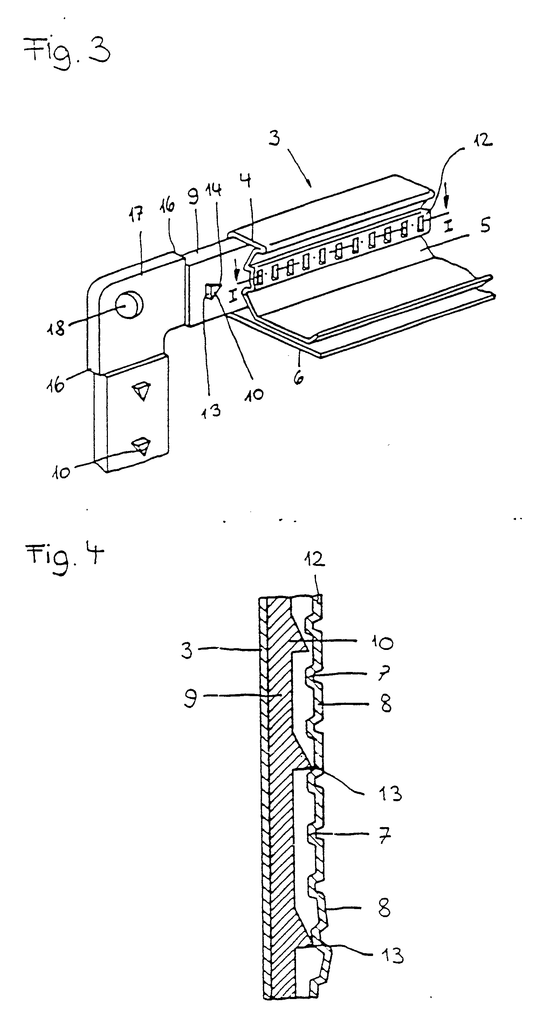

In Fig. 2 ist ein Winkelstück 2 mit einem einzuschiebenden Schenkel 9 gezeichnet, der zweite Schenkel 9 ist nur teilweise dargestellt. Dreieckige Erhebungen 10 sind so angeordnet, daß sie in Einschieberichtung von der Basis 13 zur Spitze 14 sich abflachend ausgeformt sind. Um das Winkelstück 2 bis zur Endlage in das in Fig. 1 gezeichnete Blechhohlrofil 1 einschieben zu können, sind die Winkelstücke 2 am Ende ihrer Schenkel 9 mit Schultern 16 versehen, die in der Endlage gegen die Wand 4 des Blechhohlprofils 1 stoßen. In dem die beiden Schenkel 9 des Winkelstückes 2 verbindenden Teil 17 des Winkelstückes 2 ist eine Bohrung 18 zur Verschraubung zweier zusammengesetzter Flansche angebracht.

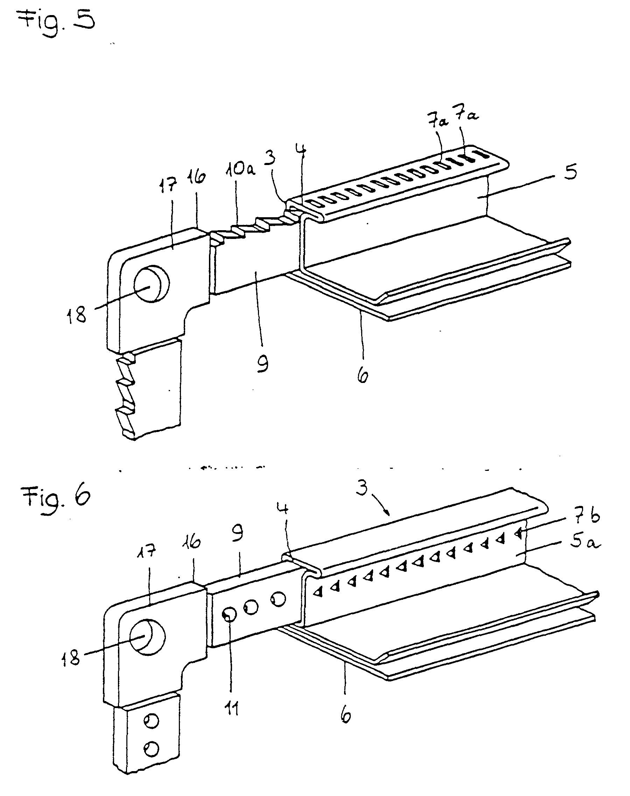

In Fig. 3 wird ein Blechhohlprofil 1 dargestellt, in das ein Winkelstück 2 bereits zum Teil eingeschoben wurde. Der eingeschobene Schenkel 9 wird dabei einerseits von den Wänden 3, 4 und 6, anderer seits durch die Basen 13 der dreieckigen Erhebungen 10 in den in etwa parallel zur Kanaloberfläche verlaufenden Wänden der Nut 12 angeführt.

In Fig. 4 ist nun im Schnitt gezeichnet, wie der Schenkel 9 des Winkelstückes 2 in Endlage, Schulter 16 des Winkelstückes 2 anliegend an Wand 4 des Blechhohlprofils 1, im Blechhohlprofil 1 arretiert wird. Die ungleichmäßigen Abstände der Erhebungen 10 auf dem Schenkel 9 bewirken, daß eine der Erhebungen 10 mit Spiel in einer der Vertiefungen 8 der Nut 12 liegt, eine der Erhebungen 10 beispielsweise mit der Basis 13 an einer der Erhebungen 7 der Nut 12 anliegt und dabei den Wandbereich der Nut 12 leicht verformt, eine der Erhebungen 10 des Schenkels 9 jedoch mit ihrer Basis, 13 in einer der Vertiefungen 8 der Nut 12 einrastet und ein Lösen des Winkelstücks 2 aus dem Blechhohlprofil 1 verhindert.

Bei der in Fig. 5 dargestellten Variante bilden in Wand 4 eingearbeitete Erhebungen 7a das zahnstangenartige Raster im Blechhohlprofil. Die Erhebungen 10a auf dem Schenkel 9 des Winkelstücks liegen sinngemäß auf dem Teil des Umfangs des Schenkels 9, der der Wand 4 zugeordnet ist.

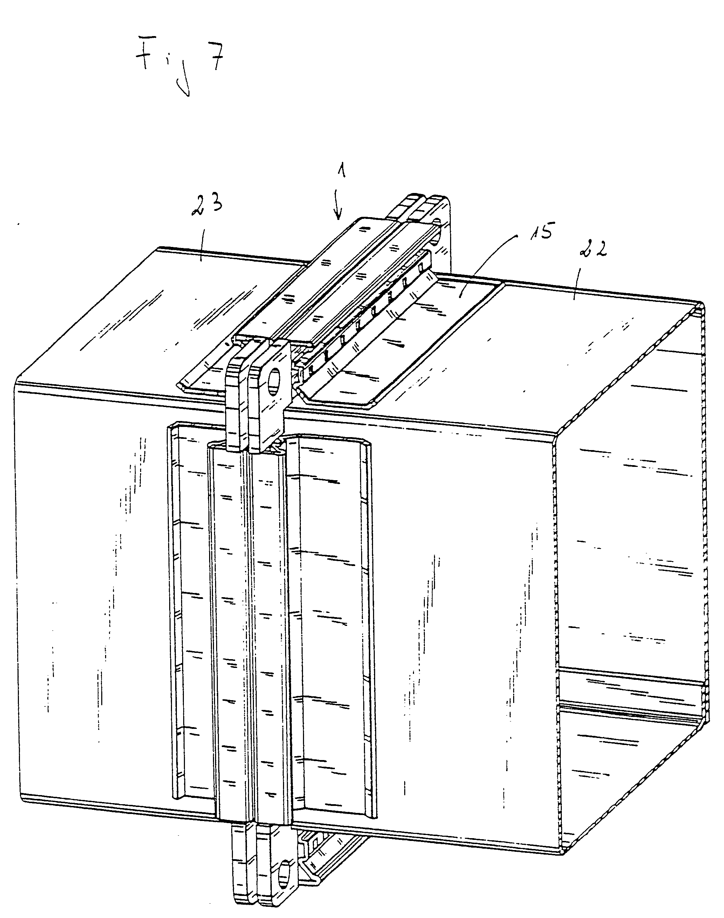

Bei der in Fig. 6 gezeichneten Variante sind die Erhebungen 7b in der Wand 5a eingearbeitet, die dazugehörigen Vertiefungen 11 im Schenkel 9 als Bohrungen ausgebildet.

**Patentansprüche**

1. Flanschverbindung zweier im Querschnitt rechteckiger Luftkanalteilstücke aus Blech mit den nachfolgenden Merkmalen :
- an jeder Kanalstück-Stirnseite ist ein Blechhohlprofil mit einer nach außen gerichteten, einen Flansch bildenden Stirnwand befestigt ;
- eckseitig sind zwei Blechhohlprofile jeweils durch ein Winkelstück verbunden mit - in die Blechhohlprofile eingesteckten Schenkeln und einem eine Bohrung aufweisenden Verbindungsteil ;
- die Schenkel werden jeweils in einen Raum des Blechhohlprofils gesteckt, der durch die stirnseitige Wand, eine zugeordnete hintere Wand und eine diese Wände überbrückende Wand gebildet ist ;
- zur Verrastung sind an einer Wand des Blechhohlprofils und am aufgenommenen Schenkel in Reihe angeordnete Erhebungen bzw. Vertiefungen gebildet ;
gekennzeichnet durch die nachfolgenden weiteren Merkmale :
- am Schenkel (9) sind in dessen Längsrichtung im Querschnitt dreieckförmige Erhebungen (10) gebildet mit einer Basis (13) und einer sich daran anschließenden Auflauffläche, die (bei 14) zum Schenkelende hin in der Ebene des Schenkels (9) endet ;
- an einer Wand (4, 5) des Blechhohlprofils sind den Erhebungen (10) am Schenkel (9) zugeordnete Rastelemente in Form von Erhebungen (7) und Vertiefungen (8) gebildet ;
- der Abstand der Erhebungen (10) am Schenkel (9) voneinander ist ungleichmäßig ;
- der Abstand der Erhebungen (7) und Vertiefungen (8) voneinander ist jeweils gleichmäßig.

2. Flanschverbindung nach Anspruch 1, dadurch gekennzeichnet, daß die von der Stirnseite abgewandte Wand (5) des Blechhohlprofils als Rastwand ausgebildet ist, wobei die Erhebungen (7) und Vertiefungen (8) am Grund einer die Erhebungen (10) am Schenkel (9) aufnehmenden Nut (12) ausgeformt sind.

3. Flanschverbindung nach Anspruch 1, dadurch gekennzeichnet, daß die Erhebungen (7a) in der überbrückenden Wand (4) des Blechhohlprofils ausgebildet sind und daß ihnen sägezahnartige Erhebungen (10a) auf den Schmalseiten der Schenkel (9) des Winkelstücks zugeordnet sind.

4. Flanschverbindung zweier im Querschnitt rechteckiger Luftkanalteilstücke aus Blech mit den nachfolgenden Merkmalen :
- an jeder Kanalstück-Stirnseite ist ein Blechhohlprofil mit einer nach außen gerichteten, einen Flansch bildenden Stirnwand befestigt ;
- eckseitig sind zwei Blechhohlprofile jeweils durch ein Winkelstück verbunden mit in die Blechhohlprofile eingesteckten Schenkeln und einem eine Bohrung aufweisenden Verbindungsteil ;
- die Schenkel werden jeweils in einen Raum des Blechhohlprofils gesteckt, der durch die stirnseitige Wand, eine zugeordnete hintere Wand und eine diese Wände überbrückende Wand gebildet ist ;
- zur Verrastung sind an einer Wand des Blechhohlprofils und am aufgenommenen Schenkel in Reihe angeordnete Erhebungen bzw. Vertiefungen gebildet ;
gekennzeichnet durch die nachfolgenden weiteren Merkmale :
- in einer Wand (4, 5a) des Blechhohlprofils sind in dessen Längsrichtung zum Schenkel (9) des Winkelstückes gerichtete Erhebungen (7b) ausgebildet, die voneinander gleichmäßige Abstände haben ;
- im Schenkel (9) des Winkelstückes sind Vertiefungen (11) vorgesehen, welche voneinander unterschiedliche Abstände haben.

**Claims**

1. A flange connection for two cross-sectionally rectangular air duct parts of sheet metal having the following features :
- a hollow sheet metal section with an outwardly directed end wall forming a flange is fastened to each duct part end ;
- at the corners two hollow sheet metal sections are each connected by an angle piece with arms inserted into the hollow sheet metal sections and a connecting part having a bore ;
- the arms are inserted into a space in the hollow sheet metal section, which is formed by the end wall, an associated rear wall and a wall bridging these walls ;
- for locking, elevations or recesses are formed in a row on one wall of the hollow sheet metal section and on the accommodated arm ;
    characterized by the following further features :
- on the arm (9) there are formed, in the longitudinal direction thereof, triangular elevations (10) with a base (13) and a loading surface connected thereto, which surface ends (at 14) towards the arm end in the plane of the arm (9) ;
- locking elements in the form of elevations (7) and recesses (8) and associated with the elevations (10) on the arm (9) are formed on one wall (4, 5) of the hollow sheet metal section ;
- the spacing from each other of the elevations (10) on the arm (9) is irregular ;
- the spacing from each other of the elevations (7) and recesses (8) is regular.

2. A flange connection according to claim 1, characterized in that the wall (5) of the hollow sheet metal section remote from the end is constructed as an arresting wall, the elevations (7) and recesses (8) being formed out of the base of a groove (12) accommodating the elevations (10) on the arm (9).

3. A flange connection according to claim 1, characterized in that the elevations (7a) are constructed in the bridging wall (4) of the hollow sheet metal section and in that saw tooth-type elevations (10a) are associated therewith on the narrow sides of the arms (9) of the angle piece.

4. A flange connection for two cross-sectionally rectangular air duct parts of sheet metal comprising the following features :
- a hollow sheet metal section comprising an outwardly directed end wall forming a flange is fastened to each duct part end ;
- at the corners two hollow sheet metal sections are each connected by an angle piece with arms inserted into the hollow sheet metal sections and a connecting part having a bore ;
- the arms are inserted into a space in the hollow sheet metal section, which is formed by the end wall, an associated rear wall and a wall bridging these walls ;
- for locking, elevations or recesses are formed in a row on one wall of the hollow sheet metal section and on the accommodated arm ;
    characterized by the following further features :
- in a wall (4, 5a) of the hollow sheet metal section in the longitudinal direction thereof there are constructed elevations (7b) directed towards the arm (9) of the angle piece, which elevations (7b) are regularly spaced from each other ;
- recesses (11) are provided in the arm (9) of the angle piece, which are at different distances from each other.

**Revendications**

1. Raccord à brides servant à raccorder deux tronçons de conduits d'air en tôle, à section transversale rectangulaire, présentant les particularités suivantes :
- à chaque côté frontal d'un tronçon de conduit, est fixé un profilé creux en tôle qui présente une paroi frontale dirigée vers l'extérieur et formant une bride ;
- aux angles, deux profilés creux en tôle sont assemblés par une équerre qui possède des branches emmanchées dans les profilés creux en tôle et une partie de liaison présentant un perçage ;
- les branches sont emmanchées chacune dans une cavité du profilé creux en tôle qui est formée par la paroi frontale, une paroi arrière correspondante, et une paroi qui réunit ces parois ;
- pour le verrouillage, des bossages et des creux disposés en série sont formés, les uns sur une paroi du profilé creux en tôle et les autres sur la branche logée dans ce profilé ;
    caractérisé par les autres particularités suivantes :
- sur la branche (9) sont formés des bossages (10) présentant une forme triangulaire en section, considérée dans la direction longitudinale de cette branche et comprenant une base (13) ainsi qu'une surface d'entrée qui y fait suite et qui en se dirigeant vers l'extrémité de la branche, se termine (en 14) dans le plan de la branche (9) ;
- sur la paroi (4, 5) du profilé creux en tôle, sont formés des éléments de verrouillage associés aux bossages (10) de la branche (9) et constitués par des bossages (7) et des creux (8) ;
- l'écartement mutuel des bossages (10) portés par la branche (9) est irrégulier ;
- l'écartement mutuel des bossages (7) et des creux (8) est uniforme.

2. Raccord à brides selon la revendication 1, caractérisé en ce que la paroi (5) du profilé creux en tôle qui est située à l'opposé du côté frontal est réalisée sous la forme d'une paroi de verrouillage, les bossages (7) et les creux (8) étant formés sur le fond d'une rainure (12) destinée à recevoir les bossages (10) de la branche (9).

3. Raccord à brides selon la revendication 1, caractérisé en ce que les bossages (7a) sont formés dans la paroi de réunion (4) du profilé creux en tôle et en ce qu'à ces bossages sont associés des bossages en dents de scie (10a) formés sur les côtés étroits des branches (9) de l'équerre.

4. Raccord à brides destiné à raccorder deux tronçons de conduits d'air en tôle de section transversale rectangulaire, possédant les particularités suivantes :
- à chaque côté frontal d'un tronçon de conduit, est fixé un profilé creux en tôle qui présente une paroi frontale dirigée vers l'extérieur et formant une bride ;
- aux angles, deux profilés creux en tôle sont assemblés chacun par une équerre qui possède des branches emmanchées dans les profilés creux en tôle et une partie de liaison présentant un perçage ;
- les branches sont emmanchées chacune dans une cavité du profilé creux en tôle qui est formée par la paroi frontale, une paroi arrière correspondante, et une paroi qui réunit ces parois ;

- pour le verrouillage, des bossages et des creux disposés en série sont formés, les uns sur une paroi du profilé creux en tôle et les autres sur la branche logée dans ce profilé ;

caractérisé par les autres particularités suivantes :

- dans une paroi (4, 5a) du profilé creux en tôle, sont formés des bossages (7b) dirigée vers la branche (9) de l'équerre dans la direction longitudinale de ce profilé et qui ont des écartements mutuels uniformes ;

- dans la branche (9) de l'équerre, sont prévus des creux (8) qui sont espacés d'écartements mutuels différents les uns des autres.

Fig. 1

Fig. 2

Fig. 3

Fig. 4

Fig. 5

Fig. 6

Fig 7